# FASCICULE DE BREVET EUROPEEN

(11) **EP 1 525 748 B1**
(45) Date de publication et mention de la délivrance du brevet: **05.03.2008**
(21) Numéro de dépôt: 03765253.4
(22) Date de dépôt: 21.07.2003
(51) Int. Cl.: H04N 7/167, H04N 7/173

(54) **PROCEDE ET MODULE ELECTRONIQUE DE TRANSMISSION SECURISEE DE DONNEES**
VERFAHREN UND ELEKTRONISCHER MODUL FÜR SICHEREN DATENÜBETRAGUNG
METHOD AND ELECTRONIC MODULE FOR SECURE DATA TRANSMISSION

(30) Priorité: 24.07.2002 CH 20021298
(43) Date de publication de la demande: 27.04.2005
(73) Titulaire: NagraCard SA, 1033 Cheseaux-sur-Lausanne (CH)
(72) Inventeur: NICOLAS, Christophe, CH-1028 Préverenges (CH)
(74) Mandataire: Wenger, Joel-Théophile
(86) Numéro de dépôt international: PCT/IB2003/003344
(87) Numéro de publication internationale: WO 2004/010698

(56) Documents cités:
- WO-A-00/56068
- WO-A-01/50755

## Description

### DOMAINE DE L'INVENTION

La présente invention concerne un procédé de transmission sécurisée de données point à point entre un centre de gestion et une unité parmi une pluralité d'unités d'utilisateur reliées à ce centre de gestion.

Elle concerne également un module électronique permettant de mettre en oeuvre ce procédé.

### ART ANTERIEUR

Dans le cas général de la diffusion de données point à point, et en particulier dans le cas de la diffusion de vidéos à la demande (VOD = Video On Demand), des fichiers de données, contenant par exemple des images et du son, sont stockés dans une base de données, dénommée "centre de gestion" ou "serveur VOD". Ces données ou fichiers sont notamment tous ceux qui peuvent être commandés par tous les utilisateurs reliés à ce centre de gestion. Les données sont également des fichiers qui peuvent être diffusés, en particulier toutes les informations qui peuvent être diffusées sur des canaux accessibles par abonnement. Dans la suite du texte, les données à transmettre sont dénommées le contenu.

Des centres intermédiaires peuvent être placés entre le centre de gestion et les unités d'utilisateur. Ces centres intermédiaires effectuent une partie des opérations de transmission de données et de vérification des droits et servent en quelque sorte de ré-émetteurs. Dans la suite du texte, les termes "centre de gestion" ou "serveur VOD" englobent également ces centres intermédiaires. Des tels centres sont notamment décrits dans la publication WO 00/11871.

Le contenu des fichiers de données peut être stocké, comme cela est bien connu de l'homme du métier, en clair ou, plus couramment, de façon pré-encryptée. Ces fichiers contiennent des données vidéo d'une part, c'est-à-dire de façon générale, des images et du son, et des informations de service d'autre part. Ces informations de service sont des données qui permettent de gérer l'utilisation des données vidéo et comportent notamment un en-tête (Header). Ces informations peuvent être en clair ou partiellement chiffrées.

Lorsqu'un utilisateur souhaite obtenir le contenu d'un fichier, par exemple pour visualiser un fichier vidéo, un ordre est transmis au centre de gestion qui envoie à un récepteur/décodeur de l'utilisateur, d'une part le fichier vidéo sous forme d'un flux de données chiffrées et d'autre part, un flux de messages de contrôle permettant la déchiffrement du flux de données. Ce deuxième flux est appelé flux ECM (Entitlement Control Message) et contient des "mots de contrôle" (Control words = cw), renouvelés régulièrement, et utilisés pour déchiffrer le contenu chiffré envoyé par le centre de gestion. Dans le flux ECM, les mots de contrôle sont généralement chiffrés par une clé propre au système de transmission entre le centre de gestion et un module de sécurité associé au récepteur/décodeur. En effet, les opérations de sécurité sont effectuées dans un module de sécurité qui est généralement réalisé sous la forme d'une carte à puce, réputée inviolable. Cette unité peut être soit de type amovible, soit être directement intégrée au récepteur.

Lors du chiffrement d'un message de contrôle (ECM), il est vérifié, dans le module de sécurité, que le droit pour accéder au contenu considéré est présent. Ce droit peut être géré par des messages d'autorisation (EMM = Entitlement Management Message) qui chargent un tel droit dans le module de sécurité. D'autres possibilités sont également envisageables, telles que notamment l'envoi de clés de déchiffrement particulières.

La diffusion de données numériques à accès conditionnel est schématiquement divisée en trois modules. Le premier module est en charge du chiffrement des données numériques par les mots de contrôle cw et de la diffusion de ces données.

Le deuxième module prépare les messages de contrôle ECM contenant les mots de contrôle cw, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou tous les utilisateurs.

Comme mentionné ci-dessus, actuellement, dans la plupart des réalisations concrètes, les mots de contrôle changent à intervalles réguliers et sont les mêmes pour tous les utilisateurs. Un utilisateur peut donc se procurer les mots de contrôle de façon "conventionnelle", en s'abonnant à un service correspondant ou en s'acquittant des droits liés à la diffusion des informations commandées. Ces mots de contrôles peuvent ensuite être diffusés auprès d'autres utilisateurs ne disposant pas des droits nécessaires. Dans le cas où circuleraient des modules de sécurité falsifiés, la vérification des droits n'est pas effectuée ou la réponse à cette vérification donne toujours un résultat positif, un tel module de sécurité va donc retourner au décodeur, les mots de contrôle en clair. Dans ce cas, il est possible que d'autres personnes utilisent les mots de contrôle ainsi obtenus, sans être au bénéfice des droits correspondants, puisque ces mots de contrôle sont identiques pour tous les utilisateurs. Ceci est d'autant plus important que la diffusion point à point est rarement réellement point à point entre le centre de gestion et chaque récepteur/décodeur relié à ce centre de gestion. Très fréquemment, cette diffusion se fait de façon point à point depuis le centre de gestion jusqu'à un "noeud de communication" desservant par exemple un immeuble ou un quartier d'habitation. A partir de ce noeud de communication, tous les récepteurs/décodeur sont reliés entre eux par un réseau "interne". Il est donc possible, à certaines conditions, de faire bénéficier tous les membres de ce réseau interne des droits de l'un des membres.

Le document WO 01/50755 décrit un procédé permettant de renforcer la sécurité lors de la diffusion de contenu chiffré. Selon ce procédé, en plus des messages conventionnels de contrôle ECM et de gestion EMM, il est prévu que les décodeurs reçoivent un message de contrôle personnel. Ce message de contrôle personnel est spécifique à chaque utilisateur de telle sorte qu'un utilisateur ne disposant pas du message de contrôle personnel ne pourra pas accéder au contenu chiffré. Dans ce procédé toutefois, le contenu est identique pour tous les décodeurs. Si un utilisateur dispose d'un module clone n'effectuant pas de vérification des droits, un contenu légalement reçu par un décodeur pourra être transmis à un autre décodeur pour y être illégalement utilisé. La sécurité de ce procédé n'est dons pas optimale.

Les modules électroniques utilisés actuellement dans les récepteurs/décodeurs comportent essentiellement une unité de calcul, de la mémoire, un désembrouilleur et un décompresseur de sons et d'images. Ces modules sont capables de déchiffrer des données qui ont été chiffrées une seule fois. La sortie d'un tel module est un signal analogique qui peut être utilisé pour la visualisation du fichier de données. En plus de ce module, un récepteur/décodeur comprend une partie réception soit par câble, satellite ou terrestre en charge de sélectionner et recevoir le signal ainsi que de le mettre en forme.

Le fonctionnement d'un tel module est défini par une norme liée au standard DVB (Digital Video Broadcasting) ou d'autres normes propriétaires (tel que DirectTV), et les opérations qu'il est susceptible de réaliser sont figées. Ce module n'est pas capable de réaliser certaines opérations qui peuvent se révéler indispensables selon les procédés de transmission de données utilisés.

### BUTS DE L'INVENTION

La présente invention se propose de pallier les inconvénients des procédés de l'art antérieur en réalisant un procédé de transmission de données chiffrées, dans lequel les données déchiffrées par l'un des utilisateurs ne sont pas utilisables par un autre.

Ce but est atteint par un procédé de transmission sécurisée de données point à point entre un centre de gestion et une unité parmi une pluralité d'unités d'utilisateur reliées audit centre de gestion, lesdites données comportant un contenu chiffré par au moins un mot de contrôle, chaque unité d'utilisateur comportant au moins un décodeur/récepteur muni d'au moins une clé de déchiffrement spécifique à chaque unité d'utilisateur,
caractérisé en ce qu'il comporte les étapes suivantes:
- transmettre une requête depuis l'unité d'utilisateur jusqu'au centre de gestion demandant l'envoi d'un contenu spécifique,
- transmettre un identifiant unique au centre de gestion, cet identifiant permettant de déterminer de façon univoque, l'unité d'utilisateur ayant transmis la requête,
- déterminer, à partir d'une base de données associée au centre de gestion, la clé correspondant à ladite unité d'utilisateur ayant transmis la requête,
- déterminer le ou les mots de contrôle associés au contenu à transmettre,
- chiffrer ces mots de contrôle avec ladite clé correspondant à ladite unité d'utilisateur ayant transmis la requête, de façon à obtenir des mots de contrôle chiffrés,
- transmettre les mots de contrôle chiffrés à l'unité d'utilisateur ayant transmis la requête, et
- transmettre ledit contenu chiffré à l'unité d'utilisateur ayant transmis la requête.

Ce but est également atteint par un procédé de transmission sécurisée de données point à point entre un centre de gestion et une unité parmi une pluralité d'unités d'utilisateur reliées audit centre de gestion, lesdites données comportant un contenu chiffré par au moins un mot de contrôle, chaque unité d'utilisateur comportant au moins un décodeur/récepteur muni d'au moins une clé de chiffrement spécifique à chaque unité d'utilisateur,
caractérisée en ce qu'il comporte les étapes consistant à:
- transmettre une requête depuis l'unité d'utilisateur jusqu'au centre de gestion demandant l'envoi d'un contenu spécifiques,
- transmettre un identifiant unique au centre de gestion, cet identifiant permettant de déterminer de façon univoque, l'unité d'utilisateur ayant transmis la requête,
- déterminer, à partir d'une base de données associée au centre de gestion, la clé correspondant à ladite unité d'utilisateur ayant transmis la requête,
- déterminer le ou les mots de contrôle associés au contenu à transmettre,
- chiffrer les données à transmettre, de façon spécifique à chaque unité d'utilisateur,
- transmettre ce contenu chiffré à ladite unité d'utilisateur ayant transmis la requête,
- transmettre les mots de contrôle chiffrés à l'unité d'utilisateur ayant transmis la requête.

Cette invention se propose en outre de pallier les inconvénients des modules électroniques de l'art antérieur en réalisant un module qui soit capable de déchiffrer des flux de données spécifique à une unité d'utilisateur.

Ce but est atteint par un module électronique comportant une unité de calcul, de la mémoire, un désembrouilleur, un décompresseur de son et d'images et un étage de déchiffrement fonctionnant avec une clé spécifique à chaque unité d'utilisateur.

### BREVE DESCRIPTION DES FIGURES

La présente invention et ses avantages seront mieux compris en référence à différents modes de réalisation de l'invention dans lesquels :
- la figure 1 est une vue d'ensemble du dispositif pour la mise en oeuvre du procédé selon l'invention;
- la figure 2 représente un premier mode de réalisation du procédé de l'invention;
- la figure 3 illustre un deuxième mode de réalisation du procédé de l'invention;
- la figure 4 représente est une variante du procédé de la figure 3;
- la figure 5 représente une combinaison des modes de réalisation des figures 2 et 3;
- la figure 6 représente une combinaison des modes de réalisation des figures 2 et 4;
- la figure 7 illustre un mode de réalisation particulier du procédé selon l'invention;
- la figure 8 représente un module électronique selon la présente invention;
- la figure 9 illustre de façon détaillée, un premier mode de réalisation d'un partie du procédé selon l'invention; et
- la figure 10 est similaire à la figure 9 et illustre un deuxième mode de réalisation d'un partie du procédé selon l'invention.

### MANIÈRES DE RÉALISER L'INVENTION

La description de l'invention est faite en supposant que la communication point à point est établie entre un serveur de fichiers numériques utilisé en vidéo à la demande et une unité placée chez un utilisateur, dénommée unité d'utilisateur. Le fichier numérique peut être un fichier vidéo et contient généralement des images et du son et peut contenir d'autres informations telles que notamment des informations de service permettant le traitement des données.

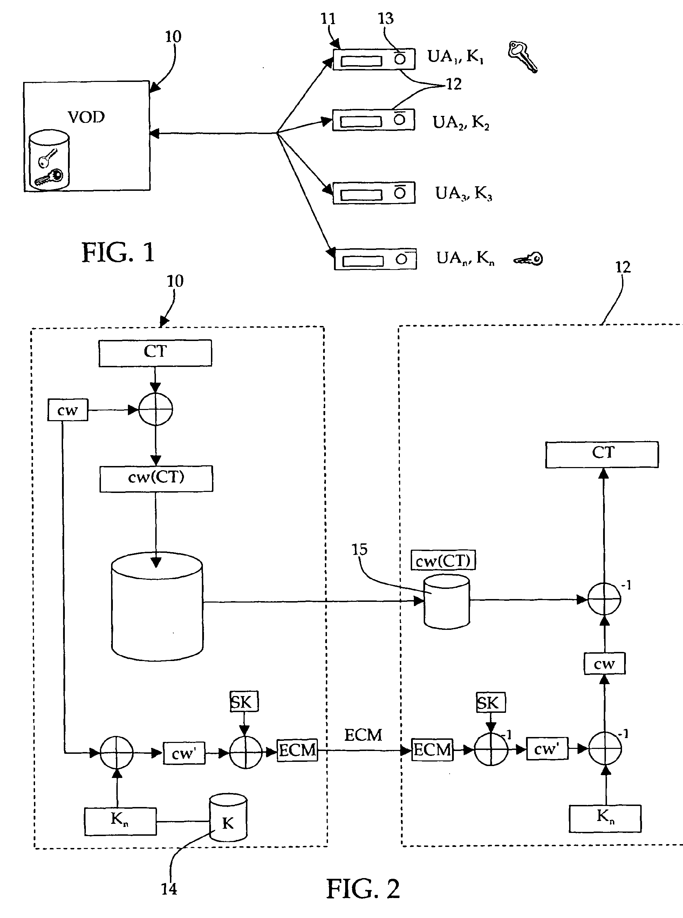

La figure 1 représente un serveur vidéo ou un centre de gestion destiné à la vidéo à la demande, dans lequel sont stockés des fichiers correspondant à des produits tels que des films ou des événements sportifs notamment, qui peuvent être commandés par les utilisateurs. Elle illustre également plusieurs unités d'utilisateur 11, formées chacune d'un récepteur/décodeur 12, éventuellement associé à un module de sécurité 13, chaque unité étant placée chez un utilisateur. Comme cela est illustré de façon schématique par la figure 1, chaque unité d'utilisateur a un numéro d'identification unique (UA₁, UA₂, ...UAₙ), et une clé (K₁, K₂, ...Kₙ) également unique et différente pour chaque unité. Cette clé peut être une clé dite symétrique ou être l'une des clés d'une paire de clé asymétrique. Dans la suite du texte, le terme de clé est utilisé indifféremment pour les deux possibilités, sauf s'il est explicitement précisé de quel type de clé il est question. Le module de sécurité 13 peut être réalisé par exemple sous la forme d'une carte à puce amovible dans le récepteur/décodeur ou intégré dans celui-ci. Elle peut toutefois également être dépourvue d'un tel module de sécurité. Dans le cas où un module de sécurité est prévu, celui-ci comporte de préférence une clé qui permet de réaliser un appariement entre le module de sécurité et le récepteur/décodeur 12. La clé (K₁, K₂, ...Kₙ) placée dans l'unité d'utilisateur peut être, selon le cas, introduite dans le récepteur ou dans le module de sécurité. Il est également possible de prévoir une clé dans chaque élément. Lorsque la localisation de la clé n'est pas précisée, cela signifie soit qu'elle est évidente pour l'homme du métier, soit que la localisation est indifférente.

Par analogie, le numéro d'identification unique peut être lié au récepteur, au module de sécurité ou aux deux. La seule contrainte qui lui est imposée est celle de pouvoir identifier sans ambiguïté, une unité d'utilisateur parmi celles qui sont liées au centre de gestion.

La figure 2 illustre un mode de réalisation du procédé selon l'invention, dans lequel le serveur vidéo 10 envoie un fichier numérique à l'une des unités d'utilisateur 12 représentées par la figure 1.

Le procédé tel que décrit en référence aux figures 1 et 2 fonctionne de la façon suivante :
Lorsqu'un utilisateur, possesseur d'une unité n, ayant un numéro d'identification unique UAₙ souhaite visualiser le contenu d'un fichier numérique, il envoie une requête au centre de gestion 10 ou au serveur VOD. Cette requête contient en particulier le numéro d'identification unique UAₙ, ce qui permet au serveur VOD d'identifier l'unité ayant envoyé la requête.

Le serveur VOD contient une base de données 14 ayant notamment comme informations, les numéros d'identification (UA₁, UA₂, ...UAₙ) uniques de chaque unité connectée au serveur, ainsi qu'une clé (K₁, K₂, ... Kₙ) liée à cette unité. Cette clé peut être une clé symétrique, qui est donc identique dans l'unité et dans la base de données du serveur VOD. Elle peut également être une clé asymétrique dite publique provenant d'une paire de clés asymétriques. L'autre clé de la paire, à savoir la clé dite privée, est stockée dans l'unité d'utilisateur. Cette clé peut être stockée de façon permanente dans un module électronique ou puce du décodeur/récepteur par exemple. La clé symétrique ou la paire de clés asymétrique est unique et différente pour chaque récepteur.

### MODE AVEC MOTS DE CONTRÔLE PERSONNALISÉS

De façon conventionnelle, le contenu (CT) du fichier numérique est chiffré, soit avant le stockage dans le serveur VOD, soit "à la volée", au moment de sa diffusion, au moyen de mots de contrôle cw. Le fichier chiffré est envoyé au récepteur dans lequel il peut être mémorisé dans une mémoire de masse 15 ou il peut être déchiffré de façon à être rendu visible par l'utilisateur.

Pour déchiffrer le contenu, il est nécessaire de disposer des mots de contrôle cw. Ceux-ci sont tout d'abord chiffrés au moyen de la clé Kₙ contenue dans la base de données et spécifique à une unité d'utilisateur. Cette clé est soit la clé symétrique, soit la clé publique de la paire de clés asymétriques. On obtient ainsi des mots de contrôle chiffrés cw' = Kₙ(cw) qui sont spécifiques à chaque unité d'utilisateur. Ces mots de contrôle chiffrés sont transmis de façon conventionnelle, par exemple en les chiffrant avec une clé de chiffrement dite clé système SK qui est identique pour toutes les unités d'utilisateur connectées au centre de gestion. Ce chiffrement avec la clé système permet d'obtenir le fichier des messages de contrôle, qui est envoyé sous forme de flux ECM, à l'unité d'utilisateur n ayant demandé le fichier vidéo. Comme les mots de contrôle ont été chiffrés au moyen d'une clé de chiffrement Kₙ qui est unique et différente pour chaque unité d'utilisateur, ils sont également uniques et différents pour chaque unité.

L'unité d'utilisateur n concernée par ce flux dispose soit de la clé symétrique, soit de la clé asymétrique privée correspondant à la clé publique utilisée pour le chiffrement des mots de contrôle. Ceci lui permet de déchiffrer les mots de contrôle cw' en appliquant la clé Kₙ à ces mots de contrôle cw' et de les obtenir en clair.

Le flux vidéo chiffré et mémorisé dans le récepteur peut ensuite être déchiffré en utilisant les mots de contrôle en clair. Il est à noter que la mémorisation du flux vidéo peut être effectuée par avance et qu'un délai quelconque peut s'écouler entre la mémorisation et la visualisation du produit. Il est également possible d'utiliser les informations du fichier vidéo et les mots de contrôle sans mémorisation du flux vidéo, en faisant du déchiffrement "à la volée".

Comme les mots de contrôle cw sont chiffrés avec une clé Kₙ spécifique à un récepteur donné, le fait de se procurer les informations figurant dans le flux ECM ne donne pas accès à des informations utilisables pour un ensemble d'utilisateurs. Une carte falsifiée dans laquelle tous les droits disponibles sont mentionnés comme étant acquis ne permettrait donc pas de visualiser des données provenant d'un autre utilisateur. La clé spécifique peut être contenue dans le module de sécurité ou dans le récepteur.

Dans ce mode de réalisation, les données peuvent être stockées en clair ou chiffrées dans le centre de gestion 10, cette deuxième solution étant souvent préférée en pratique. Ceci ne change rien du point de vue du procédé. La seule contrainte est celle de disposer d'une puissance de calcul suffisante si les donnés sont chiffrées à la volée.

### MODE AVEC CONTENU PERSONNALISÉ PAR LES MOTS DE CONTRÔLE

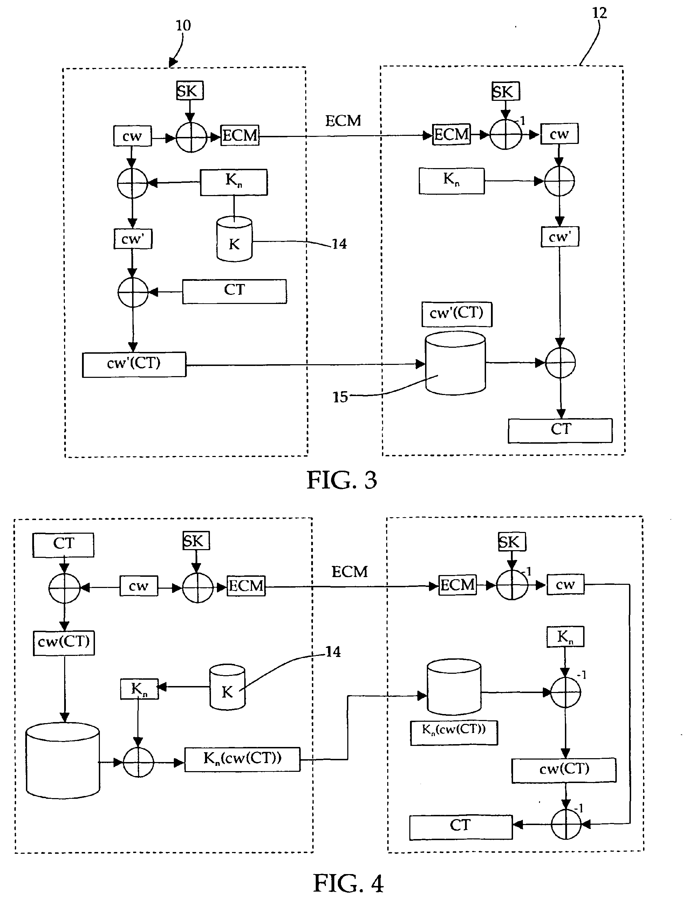

Le deuxième mode de réalisation, illustré par la figure 3, est particulièrement bien adapté au cas où les récepteurs 13 disposent d'une capacité de mémorisation de fichiers leur permettant de mémoriser au moins un fichier vidéo complet. Dans ce mode de réalisation, les mots de contrôle cw sont tout d'abord chiffrés avec la clé Kₙ de l'unité d'utilisateur n. Cette clé, qui doit être une clé symétrique, est contenue dans la base de données 14 du serveur VOD. On obtient ainsi les mots de contrôle chiffrés cw' = Kₙ(cw). Le contenu du fichier vidéo est ensuite chiffré avec les mots de contrôle chiffrés cw'. Ce contenu peut éventuellement être mémorisé dans le centre de gestion 10, bien que cela ne soit pas une solution préférée. Plus généralement, il est directement envoyé au récepteur n auquel il est destiné pour y être enregistré dans la mémoire de masse 15 ou directement visualisé.

Etant donné que la clé Kₙ permettant de chiffrer les mots de contrôle cw est différente pour chaque unité d'utilisateur, le contenu chiffré sera aussi différent pour chaque récepteur. Il est donc judicieux de stocker le contenu chiffré dans la mémoire du récepteur, plutôt que de mémoriser ce contenu dans le serveur VOD, qui ne pourra l'exploiter que pour un seul récepteur.

Parallèlement à ceci, les mots de contrôle cw sont chiffrés de façon conventionnelle, par exemple avec une clé système SK, de manière à engendrer un fichier ECM qui est envoyé sous forme de flux au récepteur concerné.

Lorsque le récepteur doit déchiffrer le contenu qu'il a mémorisé, il doit tout d'abord déchiffrer, de façon conventionnelle, les mots de contrôle cw qui lui ont été envoyés dans le flux ECM. Pour ceci, il utilise l'opération inverse au chiffrement au moyen de la clé système SK.

Le déchiffrement du contenu proprement dit est effectué de la façon suivante : les mots de contrôle cw sont déchiffrés comme mentionné ci-dessus. Ils sont ensuite chiffrés au moyen de la clé symétrique Kₙ qui a été utilisée dans le serveur VOD pour chiffrer les mots de contrôle. On obtient ainsi les mots de contrôle chiffrés cw' = Kₙ(cw). En appliquant ces mots de contrôle chiffrés cw' au contenu chiffré, on obtient le contenu CT en clair.

Dans ce mode de réalisation, il est important que la clé Kₙ soit symétrique. En effet, le fichier vidéo CT est chiffré avec des mots de contrôle déjà chiffrés. Il faut que les mots de contrôle chiffrés dans le centre de gestion et ceux chiffrés dans l'unité d'utilisateur soient les mêmes, faute de quoi, le déchiffrement du fichier de données n'est pas possible.

Comme dans le mode de réalisation précédent, les données transmises du serveur VOD 10 aux unités d'utilisateur 12 sont différentes pour chaque unité. Ainsi, des données qui peuvent être obtenues de façon "conventionnelle" par un abonné, ne peuvent pas être utilisées avec d'autres unités, par des personnes n'ayant pas acquis les droits relatifs au contenu transmis. Ceci permet un appariement efficace entre le serveur VOD et chaque unité d'utilisateur, de sorte qu'un contenu destiné à une unité d'utilisateur donnée puisse être utilisé exclusivement par cette unité et par aucune autre.

### MODE AVEC CONTENU PERSONNALISÉ PAR UNE CLÉ SPÉCIFIQUE

Dans le mode de réalisation illustré par la figure 4, le contenu CT dans le centre de gestion 10 est stocké de façon pré-encryptée. Dans ce cas, le contenu (CT) en clair est tout d'abord chiffré avec un jeu de mots de contrôle cw. Ce contenu chiffré est représenté sur la figure par cw(CT). Il est stocké sous la forme résultant de ce chiffrement. Lorsqu'il doit être transmis, le contenu pré-encrypté est tout d'abord chiffré avec la clé Kₙ spécifique à l'unité d'utilisateur 12 ayant demandé l'envoi du fichier. Le contenu est représenté sur la figure comme ayant la forme Kₙ(cw(CT)). Il est ensuite envoyé sous cette forme à l'unité d'utilisateur concernée. Ceci présente l'avantage qu'il n'est pas nécessaire de stocker les le contenu en clair dans le centre de gestion, ce qui est en pratique peu apprécié des propriétaires des médias.

Les mots de contrôle cw sont en outre chiffrés de façon conventionnelle et sont envoyés dans le flux ECM au récepteur.

Pour le déchiffrement du contenu reçu par l'unité d'utilisateur, dans le mode de réalisation de la figure 4, il est tout d'abord nécessaire de déchiffrer, également de façon conventionnelle, les mots de contrôle reçus dans le flux ECM. Ensuite, il faut déchiffrer, avec la clé Kₙ, le contenu Kₙ(cw(CT)) reçu du centre de gestion 10. On obtient ainsi le contenu tel qu'il était mémorisé dans le centre de gestion, c'est-à-dire le contenu pré-encrypté cw(CT). A ce stade, il est possible d'appliquer les mots de contrôle cw en clair, provenant du flux ECM à ces données. On obtient alors le contenu CT en clair.

### MODE AVEC MOTS DE CONTROLE PERSONNALISES COMME DANS LA FIGURE 2 ET CONTENU PERSONNALISE COMME DANS LA FIGURE 3

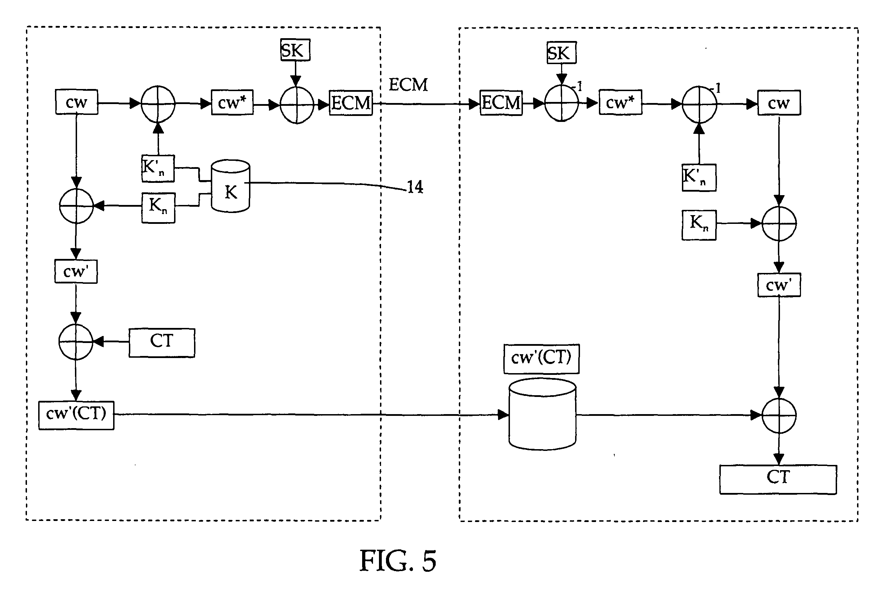

La figure 5 illustre un mode de réalisation dans lequel les mots de contrôle cw sont personnalisés de manière similaire à ce qui a été décrit en référence à la figure 2 et le contenu est personnalisé de manière similaire à ce qui a été décrit en référence à la figure 3. En ce qui concerne les mots de contrôle, ceux-ci sont tout d'abord chiffrés avec une première clé K'ₙ spécifique à l'unité d'utilisateur. Cette clé peut être symétrique ou asymétrique. On obtient des mots de contrôle chiffrés cw* = K'ₙ (cw). Ceux-ci sont à leur tour chiffrés de façon conventionnelle avec la clé système SK pour être transmis, dans le flux ECM, à l'unité d'utilisateur concernée. En appliquant la clé symétrique ou l'autre clé de la paire de clé, dans le cas où la clé K'ₙ est asymétrique, il est possible de déchiffrer les mots de contrôle cw* et d'obtenir ces mots en clair.

Parallèlement à ceci, les mots de contrôle cw sont chiffrés avec une clé Kₙ, nécessairement symétrique, spécifique à l'unité d'utilisateur, provenant de la base de données 14 liée au centre de gestion. On obtient ainsi les mots de contrôle chiffrés cw' = Kₙ (cw). Ceux-ci sont ensuite utilisés pour chiffrer le contenu à transmettre, comme dans le mode de réalisation de la figure 3. Ce contenu est ensuite envoyé à l'unité d'utilisateur 11 concernée. Le déchiffrement du contenu se fait comme cela a été expliqué en référence à la figure 3. Plus précisément, les mots de contrôle cw* sont déchiffrés au moyen de la clé K'ₙ. Ils sont ensuite rechiffrés au moyen de la clé Kₙ, ce qui permet d'obtenir les mots de contrôle chiffrés cw'. Ceux-ci sont appliqués au contenu chiffré cw'(CT) reçu du centre de gestion, de façon à retrouver le contenu CT en clair.

Il est à noter que, dans ce mode de réalisation, le principe de stockage pré-encrypté exposé en référence à la figure 4 est applicable par analogie. Il est donc possible, dans tous les cas, de stocker un contenu pré-encrypté dans le centre de gestion, tout en personnalisant soit le flux ECM, soit le flux de données, soit les deux.

### MODE AVEC MOTS DE CONTROLE PERSONNALISES COMME DANS LA FIGURE 2 ET CONTENU PERSONNALISE COMME DANS LA FIGURE 4

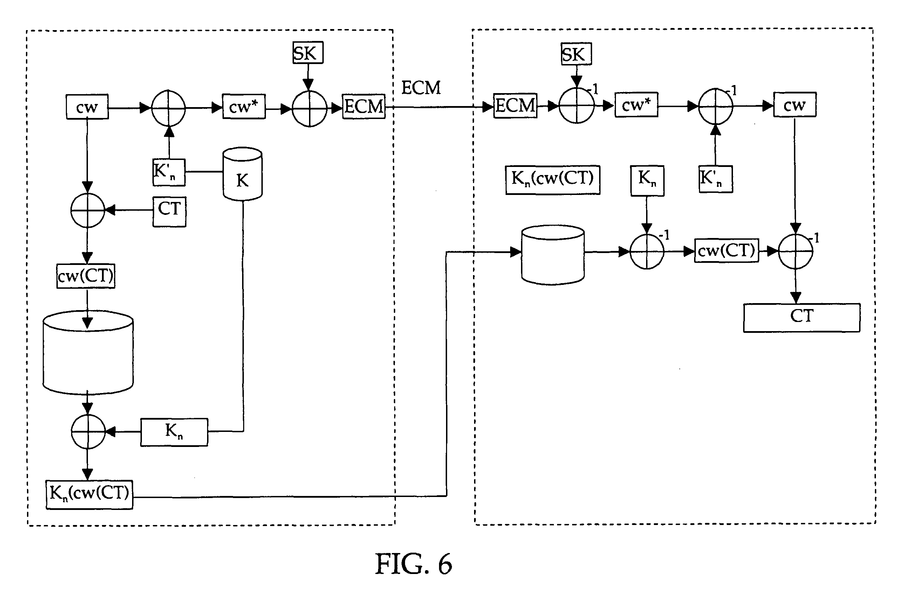

La figure 6 est une variante du procédé dans laquelle les mots de contrôle cw et le flux de données CT sont également personnalisés. Les mots de contrôle sont personnalisés de la même manière que décrit en référence à la figure 5. Ils sont chiffrés avec une première clé K'ₙ spécifique à l'unité d'utilisateur concernée, puis chiffrés de nouveau, de façon conventionnelle, avec la clé système SK pour être transmis, dans le flux ECM, à l'unité d'utilisateur concernée.

Le contenu est personnalisé de la même manière que dans le mode de réalisation de la figure 4. le contenu (CT) en clair est tout d'abord chiffré avec les mots de contrôle cw. Avant d'être transmis, le contenu pré-encrypté est tout d'abord chiffré avec la clé Kₙ spécifique à l'unité d'utilisateur ayant demandé l'envoi du contenu. Il est ensuite envoyé à l'unité d'utilisateur concernée.

Pour le déchiffrement du contenu reçu par l'unité d'utilisateur, il est tout d'abord nécessaire de déchiffrer, avec la clé système SK et avec la clé K'ₙ personnalisée, les mots de contrôle reçus dans le flux ECM.

Ensuite, il faut déchiffrer, avec la clé Kₙ, le contenu reçu du centre de gestion. On obtient ainsi le contenu tel qu'il était mémorisé dans le centre de gestion, c'est-à-dire le contenu pré-encrypté cw(CT). A ce stade, il est possible d'appliquer les mots de contrôle cw en clair, provenant du flux ECM à ces données. On obtient alors le contenu CT en clair.

Les deux modes de réalisation décrits ci-dessus présentent une sécurité accrue par rapport aux modes de réalisation précédents et à ceux de l'art antérieur, puisque les deux flux qui sont transmis entre le centre de gestion 10 et l'unité d'utilisateur 11 concernée sont spécifiques à cette unité. Cela signifie que même si une personne non autorisée est capable de déchiffrer l'une des flux, elle ne pourra pas l'utiliser sans déchiffrer l'autre flux.

Dans ces modes de réalisation, les clés K'ₙ et Kₙ peuvent être différentes. Si ces deux clés sont symétriques, il est également possible d'utiliser une seule et même clé pour les deux opérations de chiffrement. Il est également possible de prévoir que l'une des clés se trouve dans le récepteur/décodeur alors que l'autre clé se trouve dans le module de sécurité qui y est associé. Ceci est particulièrement intéressant par le fait que cela permet de s'assurer que le décodeur et le module de sécurité utilisé sont bien appariés et prévus pour communiquer l'un avec l'autre.

### MODE DE DIFFUSION MULTI UNITES D'UTILISATEURS

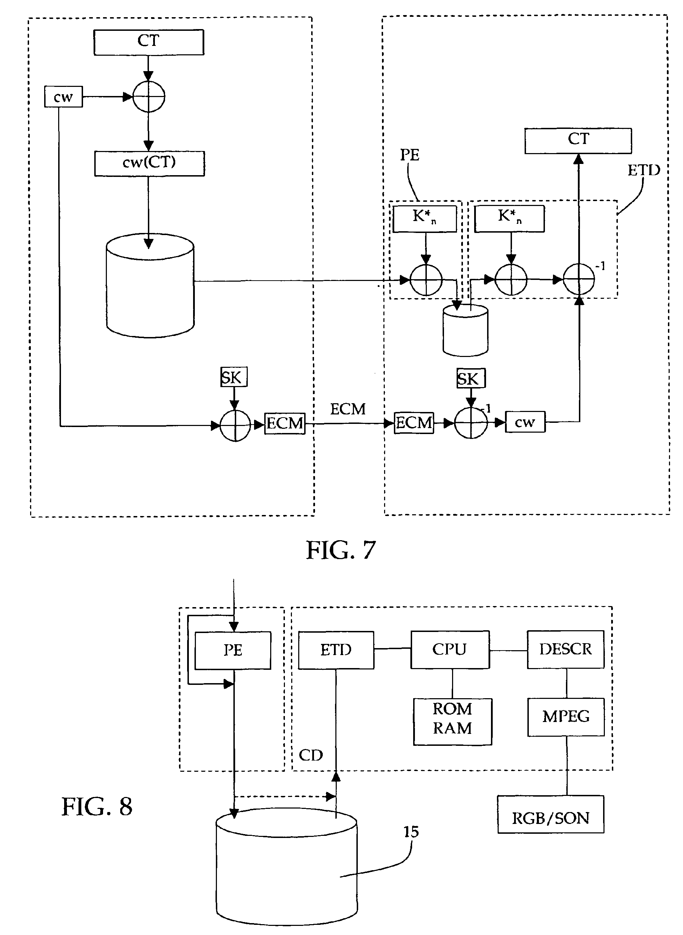

La description ci-dessus présente différents modes de réalisation d'un procédé de transmission de données en mode point à point. Il peut être souhaitable qu'une unité d'utilisateur pour la mise en oeuvre de ce procédé puisse également être utilisée pour la diffusion, auquel cas, le contenu CT et les mots de contrôle cw sont chiffrés de façon commune, à l'intention de tous les utilisateurs. La figure 7 décrit un mode de réalisation dans lequel le contenu CT et les mots de contrôle cw sont chiffrés de façon commune, à l'intention de tous les utilisateurs. Ceci signifie que les données et les mots de contrôle sont communs à tous les récepteurs, ce qui permet d'appliquer ce mode de réalisation à la radiodiffusion.

De façon conventionnelle, les données CT sont chiffrées avec les mots de contrôle cw. Les mots de contrôle cw sont à leur tour chiffrés avec la clé système SK. Le contenu et le flux ECM sont transmis au récepteur. Lorsque le contenu est reçu dans le récepteur, il est chiffré au moyen d'une clé K*ₙ qui est avantageusement symétrique, bien qu'une clé asymétrique puisse également être utilisée. Cette clé K*ₙ est spécifique à l'unité d'utilisateur. Le flux peut être stocké dans la mémoire de masse 15. Lorsque le contenu de cette mémoire doit être utilisé, il est tout d'abord déchiffré avec la clé K*ₙ, puis déchiffré une deuxième fois, avec les mots de contrôle cw, de façon à obtenir le contenu en clair. La clé K*ₙ est avantageusement mémorisée dans un module électronique tel qu'une puce du récepteur. Il est rappelé que, alors que les mots de contrôle changent généralement à intervalles réguliers, la clé K*ₙ a une durée de vie nettement plus longue et peut par exemple être enregistrée de façon définitive et immuable dans l'unité d'utilisateur.

Ce mode de réalisation offre différents avantages par rapport à une transmission sécurisée de données conventionelle. Du fait que le contenu est chiffré dans l'unité d'utilisateur avant la mémorisation avec une clé K*ₙ propre à celle-ci, un tiers qui détournerait ce contenu ne pourrait pas l'utiliser sur une autre unité d'utilisateur que celle à laquelle le contenu est destiné. De plus, même en déchiffrant le contenu à l'introduction dans le récepteur, l'utilisation de ce contenu dans un autre récepteur serait inutile. En effet, chaque récepteur s'attend à recevoir un contenu chiffré avec la clé K*ₙ qui lui est propre. Si l'on introduit un contenu en clair dans un récepteur s'attendant à recevoir un contenu chiffré, ce récepteur procédera à un déchiffrement des données en clair et les rendra donc inutilisables.

Un autre avantage de cette réalisation est le fait que la copie d'un fichier tel qu'un fichier vidéo est possible sur un récepteur/décodeur, mais que cette copie ne pourra pas être utilisée sur un autre récepteur/décodeur. En effet, la copie délivre le contenu chiffré par les mots de contrôle cw et avec la clé personnelle K*ₙ. Comme cette clé personnelle est différente pour chaque récepteur/décodeur le déchiffrement de la copie n'est pas possible. Ceci offre donc une protection efficace contre la copie illicite.

Dans le mode de réalisation illustré par les figures 4 et 7, il est nécessaire de déchiffrer deux fois de suite le contenu. Dans le cas de la figure 4, un premier déchiffrement est l'opération inverse du chiffrement avec les mots de contrôle cw' spécifiques à l'une des unités d'utilisateur et le deuxième déchiffrement est l'opération inverse du chiffrement avec les mots de contrôle cw communs à toutes les unités d'utilisateur. Ce type de déchiffrement n'est pas possible avec les puces électroniques existant actuellement.

La figure 8 illustre schématiquement un module électronique agencé pour effectuer un tel déchiffrement. En référence à cette figure, le module (CD) de l'invention comporte essentiellement une unité de calcul (CPU), de la mémoire (ROM, RAM), un désembrouilleur (DESCR), un décompresseur de son et d'images (MPEG) et un étage de déchiffrement (ETD). L'étage de déchiffrement (ETD) déchiffre le contenu qui a été surchiffré avec la clé spécifique K*ₙ du mode de réalisation de la figure 7, à l'entrée du récepteur/décodeur.

Lorsque l'unité d'utilisateur est utilisée en mode radiodiffusion, ce surchiffrement n'est bien évidemment pas effectué, car les données sont communes à tous les récepteurs/décodeurs. C'est pourquoi, un étage de chiffrement (PE) est activé dans lequel un chiffrement est appliqué sur le contenu avec la même clé spécifique K*ₙ. Ce n'est qu'après cet étage que le contenu peut être stocké dans l'unité de stockage de masse 15 que peut optionnellement contenir une telle unité d'utilisateur.

Cet étage de chiffrement (PE) est avantageusement constitué d'un seul circuit dans lequel la clé spécifique K*ₙ est difficile à obtenir. Ce circuit est apparié au module électronique (CD) du fait que la même clé se trouve dans ces deux éléments.

Si l'on souhaite disposer d'une unité d'utilisateur qui soit compatible au mode point à point et au mode radiodiffusion, l'étage de chiffrement (PE) doit pouvoir être commutable. En effet, si le contenu est chiffré par la clé spécifique K*ₙ du côté de l'émission, cet étage doit pouvoir être déconnecté. Ceci ne pose pas de problème en terme de sécurité car l'étage de déchiffrement (ETD) dans le module électronique (CD) quant à lui ne peut pas être déconnecté. Ainsi, si l'on désactive l'étage de chiffrement (PE) en mode radiodiffusion, le contenu ainsi appliqué au module électronique (CD) ne peut pas être correctement déchiffré car l'étage de déchiffrement (ETD) va déchiffrer un contenu avec la clé spécifique K*ₙ, contenu qui n'aura pas été chiffré avec cette clé.

L'étage de déchiffrement (ETD), identique à l'étage de chiffrement (PE), peut effectuer une opération relativement simple et rapide. Il est par exemple possible d'utiliser une fonction OU EXCLUSIVE, ce qui ne génère pratiquement pas de délai dans la transmission du contenu. Pour des données en mode série, il est connu d'utiliser des étages de chiffrement série qui sont initialisés selon une séquence spécifique.

Il est à noter que l'étage de déchiffrement (PE) pourrait lui aussi être intégré au module électronique pour autant que ce module dispose d'une sortie depuis l'étage de chiffrement pour envoyer le contenu dans la mémoire de masse 15, et d'une entrée dans l'étage de déchiffrement pour déchiffrer le contenu provenant de cette mémoire.

### APPARIEMENT

De façon générale, lorsqu'une unité d'utilisateur dispose d'un récepteur/décodeur et d'un module de sécurité, chacun des deux éléments comporte une clé, dite clé d'appariement Kₚ, différente pour chaque unité d'utilisateur, qui peut être symétrique ou asymétrique. Le flux ECM est reçu par le module de sécurité pour y être déchiffré et en extraire les mots de contrôle grâce à la clé système SK. La transmission des mots de contrôle du module de sécurité vers le récepteur/décodeur se fait sous forme chiffrée, soit avec la clé d'appariement Kp, soit avec une clé de session dépendant de cette clé d'appariement. Ceci est décrit en détail dans la publication WO 99/57901. Les mots de contrôle sont déchiffrés dans le décodeur grâce à la clé correspondant à celle utilisée pour le chiffrement. Ceci permet de s'assurer qu'un seul module de sécurité fonctionne avec un seul récepteur/décodeur et que ces éléments sont donc appariés.

Dans la présente invention, il est également possible de garantir l'appariement soit entre le module de sécurité et le récepteur/décodeur, soit entre le centre de gestion et le récepteur/décodeur, de différentes manières.

### APPARIEMENT ENTRE LE MODULE DE SÉCURITÉ ET LE RÉCEPTEUR/DÉCODEUR

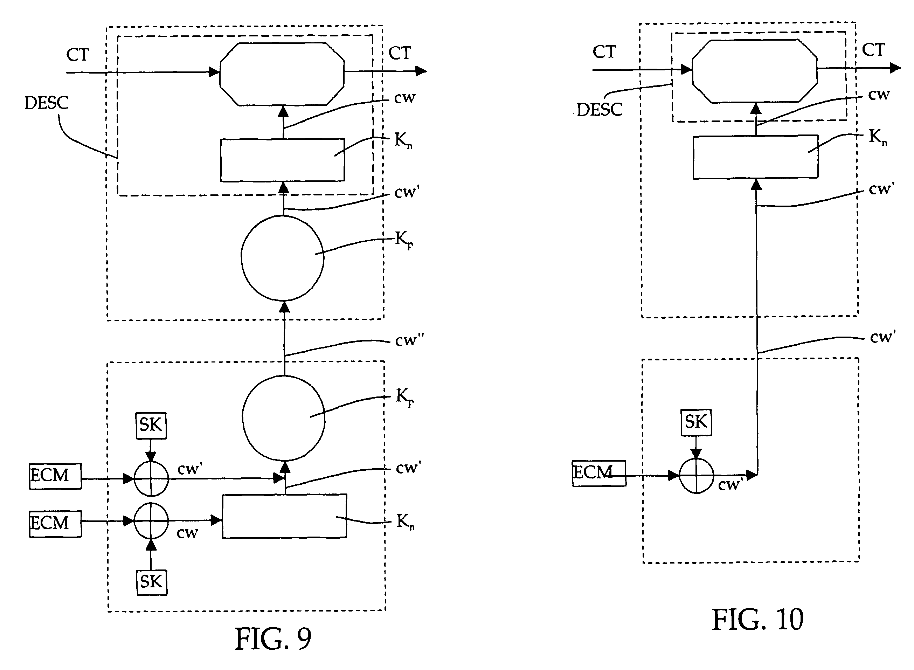

La figure 9 illustre un mode de réalisation dans lequel le récepteur/décodeur est apparié au module de sécurité. Dans le cas représenté, l'unité d'utilisateur dispose de deux clés, à savoir la clé Kₙ spécifique à chaque unité d'utilisateur d'une part, et d'autre part, la clé d'appariement Kₚ. Pour des raisons de compatibilité entre le mode point à point et le mode radiodiffusion, la clé spécifique Kₙ est également mémorisée dans le module de sécurité.

### MODE DIFFUSION

Dans le cas où l'unité d'utilisateur est utilisée en mode diffusion, le flux ECM contenant les mots de contrôle cw est introduit dans le module de sécurité. On extrait alors les mots de contrôle cw au moyen de la clé système SK. Les mots de contrôle sont ensuite rechiffrés avec la clé spécifique Kₙ de façon à obtenir les mots chiffrés cw'. Ceux-ci sont ensuite chiffrés, toujours dans le module de sécurité, au moyen de la clé d'appariement K_{P} de façon à obtenir cw" = Kₙ (cw'). Ils sont transmis sous cette forme au récepteur/décodeur. Dans ce dernier, les mots de contrôle cw" chiffrés sont tout d'abord déchiffrés avec la clé d'appariement Kp. Ils sont ensuite déchiffrés une nouvelle fois avec la clé spécifique Kₙ de façon à obtenir ces mots de contrôle cw en clair. Ils peuvent alors être utilisés pour déchiffrer le contenu CT.

Dans le mode de réalisation illustré par cette figure 9, la clé spécifique est mémorisée dans le désembrouilleur. Cette clé peut y être inscrite de façon définitive (PROM, ROM). La clé d'appariement peut être une clé logicielle mémorisée dans le décodeur, en dehors du désembrouilleur. Les deux clés pourraient également être enregistrées dans le désembrouilleur ou en dehors de celui-ci.

### MODE POINT À POINT

Dans le cas où l'unité d'utilisateur est utilisée en mode point à point, le flux ECM contenant les mots de contrôle cw' a été personnalisé dans le centre de gestion. Il n'est donc pas nécessaire d'effectuer un chiffrement avec la clé spécifique Kₙ. Le flux ECM est donc déchiffrés au moyen de la clé système, de façon à en extraire les mots de contrôle. Ceux-ci sont ensuite directement rechiffrés avec la clé d'appariement Kp avant d'être envoyés au récepteur/décodeur. Dans celui-ci, ils sont déchiffrés tout d'abord au moyen de la clé d'appariement Kp, puis au moyen de la clé spécifique Kₙ. Ceci permet d'obtenir les mots de contrôle cw en clair.

### APPARIEMENT ENTRE LE CENTRE DE GESTION ET LE RÉCEPTEUR/DÉCODEUR

Le mode de réalisation de la figure 10 représente un exemple dans lequel l'appariement est effectué entre le centre de gestion et le récepteur/décodeur. Les mots de contrôle sont chiffrés au moyen de la clé spécifique Kₙ, comme cela a été décrit en référence à la figure 2 notamment. Le flux ECM contenant ces mots de contrôle cw' chiffrés spécifiques est envoyé soit au module de sécurité qui les transmets sans changement au récepteur/décodeur, soit directement au récepteur/décodeur sans passer par le module de sécurité. Ils y sont alors déchiffrés au moyen de la clé spécifique Kₙ de façon à les obtenir en clair. Ce mode de réalisation permet d'effectuer un appariement entre le centre de gestion et le récepteur/décodeur, puisque seul le récepteur/décodeur ayant la clé spécifique qui est mémorisée dans le centre de gestion donnera un résultat utilisable.

Comme mentionné précédemment, les clés peuvent être immuables et être enregistrées de façon définitive dans une puce du récepteur. Elles peuvent également être enregistrées dans le module de sécurité de chaque unité d'utilisateur. Ces clés peuvent également être envoyées depuis le centre de gestion et être ainsi modifiées. Une manière de réaliser ceci est par exemple d'envoyer une nouvelle clé dans un flux de messages de contrôle hautement sécurisé, dénommé "master ECM". Ceci permet d'améliorer encore la sécurité puisqu'il est possible de changer de clé après une certaine durée d'utilisation.

## Revendications

1. Procédé de transmission sécurisée de données point à point entre un centre de gestion (10) et une unité parmi une pluralité d'unités d'utilisateur reliées audit centre de gestion, lesdites données comportant un contenu (CT) chiffré par au moins un mot de contrôle (cw), chaque unité d'utilisateur comportant au moins un décodeur/récepteur (12) muni d'au moins une clé de chiffrement (K₁, K₂, ...Kₙ) spécifique à chaque unité d'utilisateur, ce procédé comportant les étapes suivantes :
- transmettre une requête depuis l'unité d'utilisateur (D₁, D₂, ...Dₙ) jusqu'au centre de gestion demandant l'envoi d'un contenu (CT) spécifiques,
- transmettre un identifiant unique (UA₁, UA₂, ...UAₙ) au centre de gestion, cet identifiant permettant de déterminer de façon univoque, l'unité d'utilisateur ayant transmis la requête,
- déterminer, à partir d'une base de données (14) associée au centre de gestion, la clé (Kₙ) correspondant à ladite unité d'utilisateur ayant transmis la requête,
- déterminer le ou les mots de contrôle (cw) associés au contenu (CT) à transmettre,
ce procédé étant **caractérisé en ce qu'**il comporte en outre les étapes consistant à :
- chiffrer le contenu (CT) à transmettre, de façon spécifique à chaque unité d'utilisateur,
- transmettre ce contenu chiffré à ladite unité d'utilisateur ayant transmis la requête,
- transmettre les mots de contrôle chiffrés à l'unité d'utilisateur ayant transmis la requête.

2. Procédé de transmission sécurisée de données selon la revendication 1, **caractérisé en ce que** l'on chiffre le contenu à transmettre avec la clé Kₙ spécifique au récepteur.

3. Procédé de transmission sécurisée de données selon la revendication 1, **caractérisé en ce que** l'on chiffre les mots de contrôle (cw) avec ladite clé (Kₙ) correspondant à ladite unité d'utilisateur ayant transmis la requête, de façon à obtenir des mots de contrôle chiffrés (cw'), et **en ce que** l'on chiffre le contenu à transmettre avec ces mots de contrôle chiffrés (cw').

4. Procédé de transmission sécurisée de données selon la revendication 3, **caractérisé en ce que** la clé utilisée pour le chiffrement du contenu (CT) et correspondant à l'unité d'utilisateur est différente de la clé utilisée pour le chiffrement des mots de contrôle destinés à être transmis (cw) et correspondant à l'unité d'utilisateur.

5. Procédé de transmission sécurisée de données selon la revendication 3, **caractérisé en ce que** la clé utilisée pour le chiffrement du contenu (CT) et correspondant à l'unité d'utilisateur est la même que la clé utilisée pour le chiffrement des mots de contrôle destinés à être transmis (cw) et correspondant à l'unité d'utilisateur.

6. Module électronique destiné à recevoir un contenu (CT) comportant une unité de calcul (CPU), de la mémoire (ROM, RAM), un désembrouilleur (DESCR) et un décompresseur de son et d'images (MPEG), le désembrouilleur étant agencé pour recevoir des mots de contrôle (cw), **caractérisé en ce qu'**il comporte en outre un étage de déchiffrement préliminaire (ETD) agissant sur le contenu (CT) reçu et fonctionnant avec une clé spécifique (K*ₙ) à chaque unité d'utilisateur.

## Claims

1. Process for point-to-point secured transmission of data between a managing centre (10) and a unit among a plurality of user units linked to said managing centre, said data including a content (CT) encrypted by at least one control word (cw), each user unit including at least one decoder/receiver (12) provided with at least one encryption key (K₁, K₂, ... Kₙ) specific to each user unit, this process comprising the following steps :
- transmitting a request from the user unit (D₁, D₂, ... Dₙ) to the managing centre requesting the sending of a specific content (CT),
- transmitting a unique identifier (UA₁, UA₂, ... UAₙ) to the managing centre, this identifier allowing to unequivocally determine the user unit having transmitted the request,
- determining, from a database (14) associated with the managing centre, the key (Kₙ) corresponding to said user unit having transmitted the request,
- determining the control word or words associated with the content (CT) to be transmitted,
this process being **characterized in that** it includes the following steps :
- encrypting the content (CT) to be transmitted in a way that is specific to each user unit,
- transmitting this encrypted content to the user unit having transmitted the request.
- transmitting the encrypted control words to the user unit having transmitted the request.

2. Process for secured transmission of data according to claim 1, **characterized in that** the content to be transmitted is encrypted by the key (Kₙ) specific to the receiver.

3. Process for secured transmission of data according to claim 1, **characterized in that** the control words (cw) are encrypted with said key (Kₙ) corresponding to said user unit having transmitted the request, in order to obtain encrypted control words (cw'), and **in that** the content to be transmitted is encrypted by these encrypted control words (cw').

4. Process for secured transmission of data according to claim 1, **characterized in that** the key used to encrypt the content (CT) and corresponding to the user unit is different from the key used to encrypt the control words to be transmitted (cw) and corresponding to the user unit.

5. Process for secured transmission of data according to claim 1, **characterized in that** the key used to encrypt the content (CT) and corresponding to the user unit is the same as the key used to encrypt the control words to be transmitted (cw) and corresponding to the user unit.

6. Electronic module intended to receive a content (CT) including a calculation unit (CPU), memory (ROM, RAM), a descrambler (DESCR), a sound and images decompressor (MPEG), the descrambler being designed to receive control words (cw), **characterized in that** it further comprises a preliminary decryption stage (ETD) acting on the received content (CT) and working with a key specific to each user unit.

## Patentansprüche

1. Verfahren der gesicherten Punkt-zu-Punkt-Datenübertragung zwischen einem Verwaltungszentrum (10) und einer von einer Mehrzahl von Benutzereinheiten, die an ein Verwaltungszentrum angeschlossen sind, wobei die Daten einen mit zumindest einem Steuerwort (cw) kodierten Inhalt (CT) umfassen, jede Benutzereinheit zumindest einen Dekodierer/Empfänger (12) umfasst, der mit zumindest einem für jede Benutzereinheit spezifischen Dekodierschlüssel (K₁, K₂, ... Kₙ) versehen ist, und das Verfahren die folgenden Schritte umfasst:
- Übermittlung einer Anforderung von der Benutzereinheit (D₁, D₂, ... Dₙ) zum Verwaltungszentrum, in der die Zusendung eines spezifischen Inhalts (CT) verlangt wird,
- Übermittlung einer eindeutigen Kennung (UA₁, UA₂, ... UAₙ) an das Verwaltungszentrum, wobei diese Kennung in eindeutiger Weise die Benutzereinheit zu ermitteln gestattet, die die Anforderung übermittelt hat,
- Ermittlung des Schlüssels (Kₙ), der der Benutzereinheit entspricht, die die Anforderung übermittelt hat, aus einer mit dem Verwaltungszentrum verbundenen Datenbank (14),
- Ermittlung des oder der Steuerwörter (cw), die dem zu übermittelnden Inhalt (CT) beigesellt sind,
wobei dieses Verfahren **dadurch gekennzeichnet ist, dass** es ausserdem die Schritte umfasst, die bestehen aus:
- Kodierung des zu übermittelnden Inhalts (CT) auf für jede Benutzereinheit spezifische Weise,
- Übermittlung dieses kodierten Inhalts an die Benutzereinheit, die die Anforderung übermittelt hat,
- Übermittlung der kodierten Steuerwörter an die Benutzereinheit, die die Anforderung übermittelt hat.

2. Verfahren der gesicherten Datenübermittlung nach Anspruch 1, **dadurch gekennzeichnet, dass** der zu übermittelnde Inhalt mit dem für den Empfänger spezifischen Schlüssel Kₙ kodiert wird.

3. Verfahren der gesicherten Datenübermittlung nach Anspruch 1, **dadurch gekennzeichnet, dass** die Steuerwörter (cw) mit dem Schlüssel (Kₙ) kodiert werden, der der Benutzereinheit entspricht, die die Anforderung übermittelt hat, in der Weise, dass kodierte Steuerwörter (cw') gewonnen werden, und dadurch, und dass der zu übermittelnde Inhalt mit diesen kodierten Steuerwörtern (cw') kodiert wird.

4. Verfahren der gesicherten Datenübermittlung nach Anspruch 3, **dadurch gekennzeichnet, dass** der für die Kodierung des Inhalts (CT) verwendete Schlüssel, der der Benutzereinheit entspricht, ein anderer als der Schlüssel ist, der für die Kodierung der zu übermittelnden Steuerwörter (cw) verwendet wird und der Benutzereinheit entspricht.

5. Verfahren der gesicherten Datenübermittlung nach Anspruch 3, **dadurch gekennzeichnet, dass** der für die Kodierung des Inhalts (CT) verwendete Schlüssel, der der Benutzereinheit entspricht, der gleiche wie der Schlüssel ist, der für die Kodierung der zu übermittelnden Steuerwörter (cw) verwendet wird und der Benutzereinheit entspricht.

6. Elektronischer Modul, dafür bestimmt, einen Inhalt (CT) zu empfangen und eine Recheneinheit (CPU), Speicher (ROM, RAM), einen Descrambler (DESCR) und einen Dekompressor für Klang und Bilder (MPEG) umfassend, wobei der Descrambler dafür ausgelegt ist, Steuerwörter (cw) zu empfangen, **dadurch gekennzeichnet, dass** er ausserdem eine Dekodier-Vorstufe (ETD) umfasst, die auf den empfangenen Inhalt (CT) wirkt und mit einem für jeden Benutzer spezifischen Schlüssel (K*ₙ) funktioniert.
